# DEMANDE DE BREVET EUROPEEN

(11) **EP 2 098 698 A1**
(43) Date de publication de la demande: **09.09.2009**
(21) Numéro de dépôt: 09153427.1
(22) Date de dépôt: 23.02.2009
(51) Int. Cl.: F01N 3/20

(54) **Procede et dispositif de gestion d'une solution de traitement des gaz d'echappement**

(30) Priorité: 06.03.2008 FR 0851457
(71) Demandeur: Peugeot Citroën Automobiles Société Anonyme, 78140 Velizy Villacoublay (FR)
(72) Inventeur: Crehan, Gabriel, 75019 Paris (FR); Ferhan, Mehdi, 75015 Paris (FR); Pain, Mireille, 77500 Chelles (FR); Thomazon, Stéphane, 92250 La Garenne-Colombes (FR)
(74) Mandataire: Ménès, Catherine

(57) **Abrégé**

Un procédé de gestion d'une solution de traitement des gaz d'échappement, le procédé comprenant les étapes de maintien à une température fixée de la solution et de mesure de l'indice de réfraction de la solution à ladite température.
L'invention s'étend en outre à un dispositif de gestion d'une solution de traitement des gaz d'échappement, le dispositif comprenant un élément de chauffage (42,52) de la solution à une température fixée et un capteur (46,56) de mesure de l'indice de réfraction de la solution de traitement des gaz d'échappement à ladite température.

## Description

La présente invention concerne un procédé et un dispositif de gestion d'une solution de traitement des gaz d'échappement de véhicules.

La combustion de combustible fossile comme le pétrole ou le charbon dans un système de combustion, en particulier le carburant diesel dans un moteur diesel, peut entraîner la production en quantité non négligeable de polluants qui peuvent être déchargés par l'échappement dans l'environnement et y causer des dégâts. Parmi ces polluants, l'émission des oxydes d'azote appelés NOx pose un problème puisque ces gaz sont soupçonnés d'être un des facteurs qui contribuent à la formation des pluies acides et à la déforestation.

Les législations sur les émissions des véhicules et poids lourds prévoient entre autres une diminution des rejets d'oxydes d'azote NOx dans l'atmosphère. Pour atteindre cet objectif, le document WO-A2-2007104779 mentionne le procédé SCR (en anglais « Selective Catalytic Reduction ») qui permet la réduction des oxydes d'azote par injection d'un réducteur ou agent réducteur (ces deux termes étant équivalents) dans la ligne d'échappement. Ce réducteur est généralement de l'ammoniac. Cet ammoniac peut provenir de la décomposition par thermolyse d'une solution d'un précurseur d'ammoniac dont la concentration peut être celle de l'eutectique. Un tel précurseur d'ammoniac est généralement une solution d'urée.

Avec le procédé SCR, les dégagements élevés de NOx produits dans la chambre de combustion lors d'une combustion à rendement optimisé sont traités en sortie de la chambre de combustion dans un catalyseur. Ce traitement requiert l'utilisation de l'agent de réduction à un niveau de concentration précis et dans une qualité extrême. La solution est ainsi précisément dosée et injectée par une buse dans le flux de gaz d'échappement. La solution est alors hydrolysée avant de convertir l'oxyde d'azote (NOx) en azote (N2) et en eau (H20) inoffensifs pour l'environnement.

La difficulté du procédé SCR réside dans le fait que, pour le bon fonctionnement du procédé, un bon dosage du réducteur est nécessaire. Pour cela, il est important de connaître la composition de la solution de réducteur, et en particulier la concentration de réducteur dans la solution.

Plusieurs procédés de contrôle de qualité ont été proposés. Ainsi, par exemple, le document US-A-6 408 619 propose l'utilisation d'un capteur de conductibilité pour mesurer la conductibilité de la solution. La concentration de réducteur dans la solution est alors déterminée à partir de la conductibilité mesurée.

Dans le document WO-A- 2004113897, un procédé est proposé dans lequel on détermine la permittivité et la conductibilité de la solution et on détermine alors la concentration de réducteur à partir d'une relation directe entre la permittivité et la conductibilité déterminées.

Un autre procédé est décrit dans les documents WO-A-2004025286 et US-A1-20070163240, selon lequel on applique une tension pulsée à un dispositif de chauffage d'une solution de réducteur, on chauffe localement la solution et on détermine la concentration de réducteur dans la solution à partir d'une différence de potentiel de sortie correspondant à une différence de température entre une température initiale et une température maximale d'un capteur de température.

Ces procédés ne sont cependant pas suffisamment précis et fiables. En fait, le taux relativement faible de réducteur dans la solution rend la détermination de la concentration de réducteur dans la solution à partir de la conductibilité assez difficile. Par exemple, l'urée ne semble pas avoir une constante diélectrique fixe, mais dépendante de la température et de réactions chimiques dans l'urée, lesquelles comprennent des quantités variables d'hydroxyde d'ammonium. Lorsque l'urée devient plus chaude ou plus vieille, la quantité d'hydroxyde d'ammonium augmente ce qui complique davantage la détermination d'une caractéristique diélectrique de l'urée. En outre, la détermination de la concentration à partir de la conductibilité peut être considérablement influencée s'il y a des impuretés dans la solution.

Le document WO-A2-2007104779 décrit un procédé pour déterminer la concentration d'un composant dans une solution, dans lequel :
- un échantillon d'une solution est soumis à un changement de température dans une plage de température comprenant une température caractéristique de la solution, la température caractéristique correspondant, en cas de refroidissement de l'échantillon, à la température de début de congélation et, en cas de réchauffement de l'échantillon, à la température de fin de fusion;
- une courbe de changement de température de la solution en fonction du temps écoulé est dessinée;
- la température caractéristique est déterminée;
- la linéarité de la courbe de changement de température au-dessus de la température caractéristique est analysée;
- la concentration du composant dans la solution est déterminée sur base de la température caractéristique et de la linéarité de la courbe de changement de température au-dessus de la température caractéristique.

La technique est compliquée puisqu'un contrôle fin du système de chauffage est nécessaire (chambre de chauffage bien isolée notamment). Cette technique consomme aussi beaucoup d'énergie parce que la solution de réducteur est chauffée et refroidie. De plus, la température à l'intérieur et à l'extérieur de la chambre de chauffage ou la convection forcée qui modifie le gradient de refroidissement ne sont pas pris en compte.

Le document JP-A-2001020724 décrit des moyens de détecter la concentration d'urée d'une solution comprenant un capteur d'indice de réfraction pour détecter l'indice de réfraction de la solution aqueuse d'urée, un capteur de température pour détecter la température de la solution d'urée et un moyen de calcul pour déterminer la concentration en urée à partir des valeurs détectées par les deux détecteurs.

Cette solution est relativement peu onéreuse et pratique. Ce dispositif est cependant limité pour mesurer avec précision la concentration absolue d'urée en solution dans certaines conditions. De telles conditions se rencontrent par exemple en conduisant en Finlande (basse température) ou en mettant une importante quantité d'urée dans le réservoir. L'intérêt de mettre une quantité d'urée importante dans le réservoir (actuellement limitée à 33% en masse) est d'augmenter l'autonomie des réservoirs et de réduire ainsi le coût pour l'utilisateur et le désagrément d'un remplissage fréquent du réservoir.

Par exemple, à basse température (inférieure à -10°C), l'urée cristallise partiellement ou totalement. L'urée peut alors tomber au fond du réservoir ou rester en suspension dans la solution. La présence de cristaux d'urée dans la solution ne modifie pas la valeur de l'indice de réfraction. De ce fait, la mesure de l'indice de réfraction de la solution ne permet pas de déterminer la présence de cristaux. La concentration d'urée déduite par le dispositif du document JP-A-2001020724 n'est donc pas la valeur réelle de la concentration d'urée dans la solution en présence de cristaux d'urée.

Puisque la détermination précise de la concentration de réducteur dans la solution est importante pour le bon fonctionnement du procédé SCR, il existe un besoin pour un procédé qui permet une gestion fiable de concentration en réducteur dans une solution de traitement des gaz d'échappement.

La présente invention a ainsi pour premier objet un procédé de gestion d'une solution de traitement des gaz d'échappement, le procédé comprenant les étapes de maintien à une température fixée de la solution, et de mesure de l'indice de réfraction de la solution à ladite température.

Dans une variante de l'invention, l'étape de maintien à une température fixée comprend une étape de mesure de la température de la solution, et une étape de chauffage de la solution si la température est inférieure à un seuil prédéterminé.

La solution de traitement des gaz d'échappement étant dans un réservoir et dans une chambre de pré-injection reliée au réservoir, la chambre ayant un volume inférieur au volume du réservoir, le procédé peut de plus comprendre, au cours de l'étape de maintien à une température fixée, le maintien de la solution du réservoir à une température inférieure à la température de la solution dans la chambre.

Lorsque la solution de traitement des gaz d'échappement comprenant en outre un solvant, le procédé peut également comprendre en outre, selon l'indice de réfraction mesuré, une étape d'indication de gestion de la solution de traitement des gaz d'échappement, de solvant ou de réducteur.

La présente invention a également pour objet un dispositif de gestion d'une solution de traitement des gaz d'échappement, le dispositif comprenant un élément de chauffage de la solution à une température fixée et un capteur de mesure de l'indice de réfraction de la solution de traitement des gaz d'échappement à ladite température.

Ce dispositif peut également comprendre un réservoir de solution de traitement des gaz d'échappement comprenant l'élément de chauffage et une chambre de pré-injection de solution aqueuse, la chambre étant reliée au réservoir et ayant un volume inférieur au volume du réservoir, la chambre comprenant le capteur de mesure de l'indice de réfraction.

Il peut également comprendre un réservoir de solution de traitement des gaz d'échappement comprenant un premier élément de chauffage, une chambre de pré-injection de solution de traitement des gaz d'échappement, ladite chambre étant reliée au réservoir et ayant un volume inférieur au volume du réservoir, la chambre comprenant un deuxième élément de chauffage et le capteur de mesure de l'indice de réfraction. Un deuxième capteur de mesure de l'indice de réfraction peut également être prévu dans le réservoir.

Dans une variante, la chambre de pré-injection est dans le réservoir.

Dans une autre variante, il est de plus prévu un capteur de température de la solution dans la chambre et dans le réservoir.

Avantageusement, le dispositif peut également comporter un organe de contrôle relié à des capteurs de température (le cas échéant), au ou aux éléments de chauffage et au ou aux capteurs de mesure de l'indice de réfraction, cet organe de contrôle étant adpaté à fournir une indication de gestion de la solution aqueuse.

L'invention a enfin pour objet un moteur comprenant une ligne d'échappement, un injecteur relié au conduit d'échappement des gaz et un dispositif de gestion de gestion d'une solution de traitement des gaz d'échappement, conforme à la définition donnée ci-dessus, le l'invention.

D'autres caractéristiques et avantages de l'invention apparaîtront à la lecture de la description qui suit des modes de réalisation de l'invention, donnés à titre d'exemple et en référence aux figures annexées qui montrent :
- Figure 1, une représentation schématique d'une ligne d'échappement de gaz dans un véhicule utilisant par exemple le procédé SCR;
- Figures 2 à 5, des exemples de réservoir de réducteur ;
- Figure 6, une courbe d'étalonnage pour déterminer la quantité de solvant par rapport au réservoir de réducteur à une température fixée ;
- Figure 7, un ordinogramme de gestion de la quantité de solution.

Il est proposé de maintenir la solution de traitement des gaz d'échappement à une température fixée et de mesurer l'indice de réfraction de la solution à la température fixée. La température de la solution de réducteur est choisie pour empêcher la cristallisation même partielle du réducteur. Lorsque la mesure de l'indice de réfraction se fait dans des conditions où le réducteur ne cristallise pas, on peut déduire la concentration en réducteur dans la solution à partir de la mesure d'indice de réfraction de la solution à une température donnée de manière fiable.

Le réducteur utilisé dans la solution peut être tout type de réducteur et en particulier un précurseur d'ammoniac. Le précurseur peut notamment être une solution d'urée c'est-à-dire une solution binaire d'eau et d'urée.

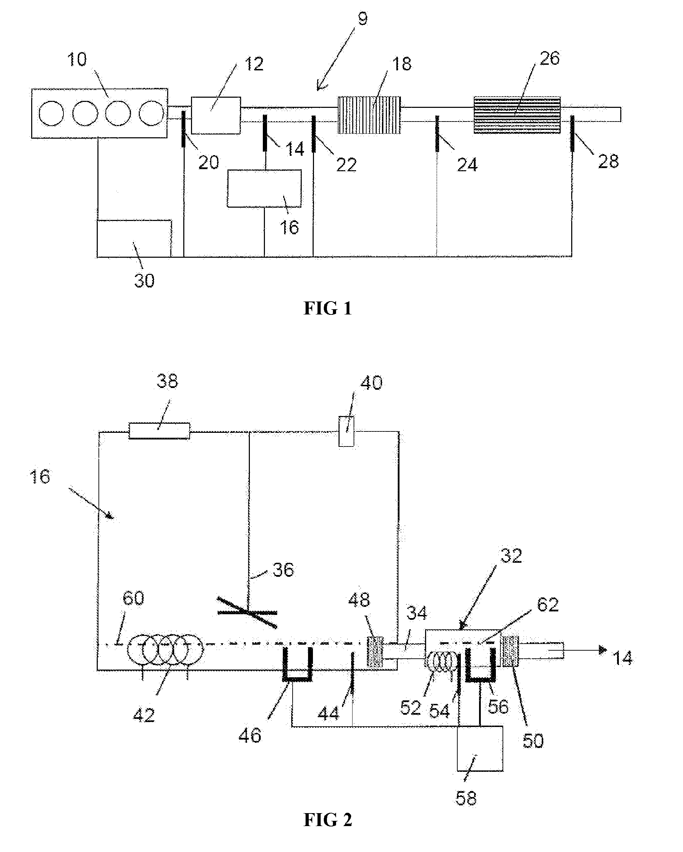

La figure 1 est une représentation schématique d'une ligne d'échappement 9 de gaz dans un véhicule utilisant par exemple le procédé SCR.

La ligne 9 comporte une chambre de combustion 10 qui émet des gaz d'échappement dans la ligne d'échappement. Parmi ces gaz émis, certains gaz sont des polluants. C'est notamment le cas des oxydes d'azote (NOx).

La ligne 9 utilisant le procédé SCR peut en outre comprendre un réacteur 12 d'oxydation catalytique, un injecteur 14 de réducteur, un réservoir 16 de réducteur et un catalyseur 18 SCR (ou catalyseur deNOx SCR). Un détecteur de NOx 20 peut être placé entre la chambre de combustion 10 et le réacteur 12 d'oxydation catalytique.

Le réacteur 12 d'oxydation catalytique (en anglais « catalytic oxydation reactor », CATOX) permet de transformer partiellement les NOx en NO2. Ceci permet d'appliquer le procédé SCR sur un mélange en proportion de 1 pour 1 de NO et de NO2 ce qui rend le procédé SCR plus efficace qu'appliqué seulement sur du NO pur. Le réacteur 12 est placé après la chambre de combustion 10 et le détecteur de NOₓ 20 sur la ligne 9.

L'injecteur 14 relié au réservoir 16 injecte un réducteur dans le mélange gazeux en sortie du réacteur 12 d'oxydation catalytique. Le réducteur est par exemple de l'urée. L'injecteur 14 comprend un capteur de température. Un autre capteur de température 22 peut être placé entre l'injecteur 14 et le catalyseur 18. Les capteurs de température peuvent être des thermocouples.

Le catalyseur 18 stocke le NH3 formé par décomposition du réducteur. Le NH3 réagit avec les NOx les transformant en N2. Le procédé SCR se caractérise par un taux de réduction élevé, souvent supérieur à 90%, pour un dosage d'ammoniac proche de la stoechiométrie. Un autre détecteur de NOx 24 en sortie du catalyseur 18 peut permettre, en liaison avec le détecteur de NOx 20, d'évaluer le rendement du procédé SCR.

Enfin, les gaz d'échappement passent à travers un filtre 26 à particule diesel (en anglais « diesel particulate filters », DPF) qui permet d'éliminer les fines particules contenues dans les gaz d'échappement des moteurs diesel. En sortie, des capteurs de pressions 28 peuvent mesurer la contre-pression créée à travers le filtre 26. Dès qu'une certaine valeur est atteinte, le procédé de régénération par le filtre 26 débute.

Les différents capteurs et détecteurs (20, 24, 22, 28) sont reliés à un organe 30 de contrôle. L'organe 30 peut être une unité centrale (« central processing unit » en anglais, CPU). L'organe 30 contrôle notamment l'injection de réducteur via l'injecteur 14 lié au réservoir 16 afin de s'assurer du bon taux de conversion du procédé SCR.

Les figures 2 à 5 sont des exemples de réservoir de réducteur d'un véhicule.

Le réservoir 16 comprend un agitateur 36 pour pouvoir agiter le contenu du réservoir 16 et ainsi homogénéiser le contenu du réservoir 16. Le réservoir 16 comprend en outre un bouchon de remplissage 38 qui permet le remplissage par l'utilisateur du réservoir 16. Le réservoir 16 comprend en outre un trou de ventilation par l'air 40 pour équilibrer la pression dans le réservoir 16. Le réservoir 16 comprend en outre un élément de chauffage du réservoir 42, un capteur de température 44 du réservoir 16 pour permettre de pouvoir maintenir la solution à une température fixée. Le capteur de température 44 du réservoir 16 peut être un thermocouple.

Ainsi, dans le réservoir 16, si le capteur de température 44 détecte une température inférieure à un seuil prédéterminé, l'élément de chauffage 42 est actionné. Le seuil de température peut être mis à tout point entre -20°C et 20°C. Ce seuil est choisi pour empêcher la solidification de la solution peut provoquer un disfonctionnement sévère de l'injecteur 14. Par exemple, si le réducteur est de l'urée, la température de la solution n'est jamais autorisée à tomber en dessous de 5°C. La solidification de la solution d'urée est alors empêchée.

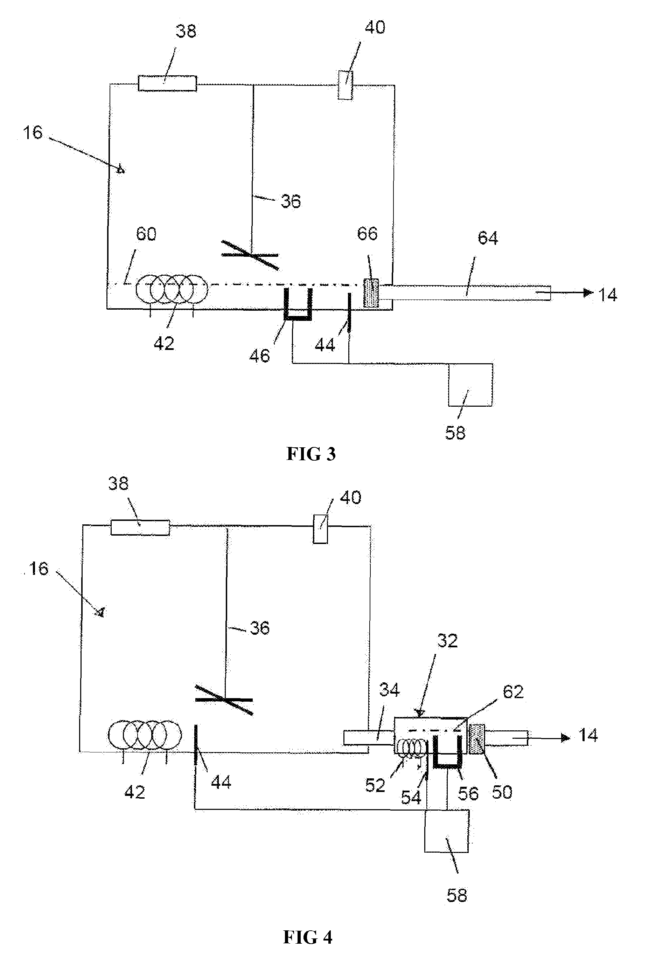

Dans les exemples des figures 2 et 3, le réservoir 16 comprend en outre un capteur 46 de mesure de l'indice de réfraction de la solution contenue dans le réservoir 16.

Dans les exemples des figures 2, 4 et 5, le réservoir 16 est relié à une chambre 32 de pré-injection. La chambre 32 relie le réservoir 16 à l'injecteur 14. Le volume de la chambre 32 est inférieur au volume du réservoir 16. Le volume de la chambre 32 peut être inférieur au volume du réservoir 16 car le réducteur n'est pas injecté massivement.

Dans la chambre 32, un élément de chauffage 52, un capteur de température 54 et optionnellement un capteur 56 de mesure de l'indice de réfraction de la solution contenue dans la chambre 32 sont disposés.

Le capteur de température 54 dans la chambre 32 détecte la température et l'élément chauffage 52 est actionné si la température tombe en dessous d'un certain seuil de température. Ce seuil de température peut être fixé à tout point compris entre -20°C et 50°C. Par exemple, si le réducteur est de l'urée, un seuil de 20°C est considéré comme un bon minimum de température qui dissout tous les cristaux en solution dans la chambre 32.

Le principe de deux zones de volumes différents (réservoir 16 et chambre 32) chauffées à deux températures différentes est avantageux. Ainsi, on peut maintenir la température du volume plus petit de la chambre 32 à une température (par exemple 20°C pour l'urée) qui assure que tout le réducteur soit dissout dans l'eau. Le grand volume du réservoir 16 est maintenu à une température inférieure (par exemple 5°C pour l'urée) qui empêche seulement la solidification de la solution. Cet emploi de deux zones évite de chauffer le grand volume du réservoir 16 à une température plus élevée que nécessaire. De l'énergie est ainsi économisée ce qui garde la consommation d'essence au minimum.

Dans les exemples de la figure 2 et 4, le réservoir 16 est relié à une chambre 32 via un passage 34. La chambre 32 est placée à l'extérieur du réservoir 16.

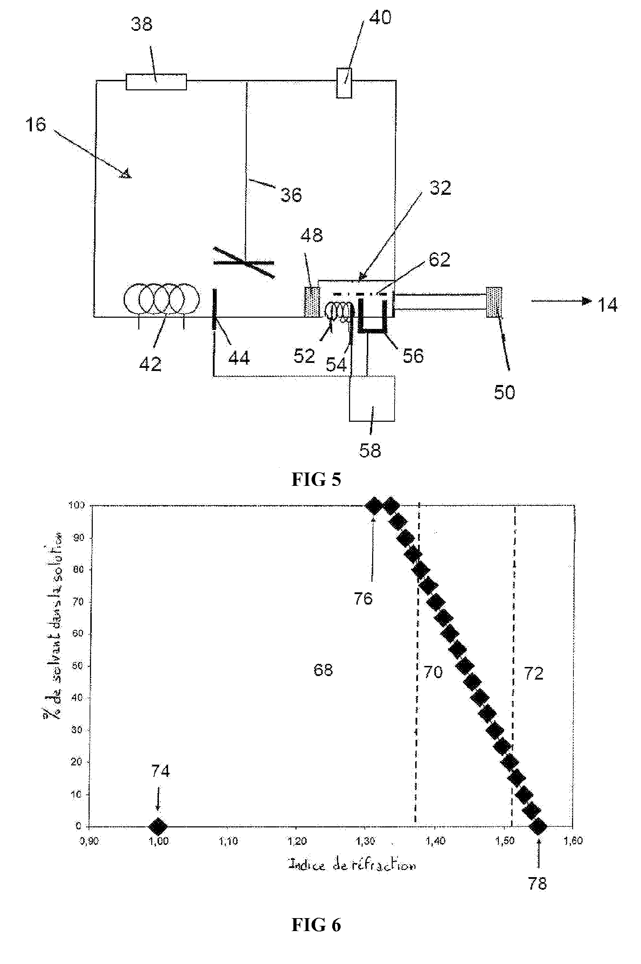

Dans l'exemple de la figure 5, la chambre 32 est placée à l'intérieur du réservoir 16 et relie le réservoir 16 à l'injecteur 14. L'encombrement de l'ensemble chambre 32 et réservoir 16 est ainsi diminué par rapport aux exemples des figures 2 et 4.

Dans chacun des exemples des figures 2, 3, 4 et 5, le capteur 46, 56 de mesure d'indice de réfraction est par exemple composé d'un émetteur de lumière et d'un récepteur de lumière. L'émetteur de lumière émet un signal lumineux que reçoit le récepteur de lumière. Le changement du signal lumineux créé par la solution à travers lequel la lumière passe est transformé en une valeur d'indice de réfraction. Dans certains cas, il est possible que la lumière traverse un gaz (réservoir vide) ou un solide (température extérieure est très basse) mais le principe est le même que précédemment.

La mesure d'indice de réfraction est effectuée à une température prédéterminée. Cette température peut être choisie pour se placer dans des conditions où le réducteur ne peut cristalliser même partiellement. Le maintien de la température de la solution à une température fixée est assuré par les éléments de chauffage 42 et 52 et les capteurs de température 44 et 54.

La valeur de température mesurée ainsi que la valeur mesurée de l'indice de réfraction à la température prédéterminée sont envoyées vers un organe 58 de contrôle. L'organe 58 peut être une unité centrale. L'organe 58 peut déduire de ces deux valeurs la concentration en réducteur dans la solution.

L'organe 58 peut aussi déterminer un certain nombre d'actions à effectuer. Ainsi, l'organe 58 détermine la quantité de réducteur en solution à injecter en fonction des mesures effectuées afin de garantir un bon rendement du procédé SCR. L'organe 58 peut déterminer si les éléments de chauffage 42, 52 doivent être actionnés ou non.

L'organe 58 peut aussi envoyer des informations à l'utilisateur sur l'état du réservoir 16 et sur les actions à effectuer en conséquence. Par exemple, en absence de réducteur dans la solution ce qui est le cas lors d'un mauvais remplissage du réservoir 16, l'organe 58 indique à l'utilisateur la nécessité de remplir avec du réducteur. De manière correspondante, si la solution comprend trop de réducteur, l'organe 58 indique à l'utilisateur la nécessité de remplir avec du solvant (par exemple de l'eau).

Le repère 60 indique le niveau minimal acceptable de solution dans le réservoir 16. Le repère 62 indique le niveau minimal acceptable dans la chambre 32. Lorsque le niveau de solution descend en dessous du repère 60 ou 62, l'organe 58 indique à l'utilisateur la nécessité d'un remplissage de la solution. Pour assurer le fonctionnement correct du système deNOx, il y a un minimum d'autonomie de 1000 kilomètres qui reste avec la solution de réducteur restante dans le réservoir. Le niveau de concentration de réducteur déterminé précédemment est utilisé comme la concentration de la solution par défaut.

Plusieurs filtres peuvent être utilisés pour injecter le moins possible d'impuretés dans la ligne 9.

Dans l'exemple de la figure 2, un filtre 48 est placé entre le réservoir 16 et la chambre 32. Le filtre 48 sert à empêcher les particules de poussière, de matière solide et les particules de réducteur de passer du réservoir 16 à la chambre 32.

Entre la chambre 32 et l'injecteur 14, un autre filtre 50 peut être installé pour empêcher principalement la suspension des particules de passer dans l'injecteur 14. Ce filtre 50 permet alors de minimiser le passage de cristaux de réducteur dans l'injecteur 14 et limite le risque de bouchage de l'injecteur 14.

Dans l'exemple de la figure 3, il n'y a pas de chambre de pré-injection externe. Un conduit 64 relie le réservoir 16 à l'injecteur 14. Un filtre 66 est placé entre le conduit 64 et le réservoir 16. On peut éviter le besoin d'une deuxième chambre si le réservoir principal du réductants est suffisamment petit. Par exemple avec un réservoir principal de 10 L ou plus petit.

Dans l'exemple de la figure 4, la chambre 32 est isolée du réservoir par un filtre 48 placé entre le réservoir 16 et la chambre 32. Entre la chambre 32 et l'injecteur 14, un filtre 50 peut être installé pour empêcher principalement la suspension des particules de passer dans l'injecteur 14.

Dans l'exemple de la figure 5, entre la chambre 32 et l'injecteur 14, un filtre 50 peut être installé pour empêcher principalement la suspension des particules de passer dans l'injecteur 14.

La figure 6 présente une courbe d'étalonnage pour déterminer la quantité de solvant par rapport au réservoir de réducteur à une température fixée. Le solvant est par exemple de l'eau. Le réducteur est par exemple de l'urée.

La figure 6 montre une courbe d'étalonnage classique montrant la relation entre l'indice de réfraction détecté et la concentration. La courbe d'étalonnage est déterminée pour une température fixée. En effet, pour la même concentration, la valeur de l'indice de réfraction change en fonction de la température de la solution.

Selon la valeur de l'indice de réfraction, différentes conclusions peuvent être dressées. Ainsi, trois zones 68, 70 et 72 sont délimitées par des pointillées verticaux sur la figure 6.

Dans la zone 68, deux points sont remarquables : le point indiqué 74 correspond à un indice de réfraction valant environ 1 et le point indiqué 76 correspond à un indice de réfraction valant environ 1,3.

Si un indice de réfraction correspondant au point 74 est mesuré, le niveau de solution dans le réservoir 16 ou dans la chambre 32 est inférieur aux repères 60 et 62. Cela signifie que le réservoir 16 contient de l'air. L'utilisateur est donc averti de la nécessité de remplir le réservoir 16.

Si un indice de réfraction correspondant au point 76 est mesuré, de la glace est présente dans le réservoir 16 ou dans la chambre 32 et l'élément de chauffage correspondant 42 ou 52 est allumé. La solution est ainsi maintenue à un point de réglage choisie pour rendre la solution liquide (typiquement au moins 5°C).

Dans la zone 68, il n'y a pas assez de réducteur dans le réservoir 16 et trop de solvant. Cela peut arriver quand l'utilisateur a additionné seulement de l'eau dans le réservoir 16 sans réducteur. Cela peut avoir pour conséquence de rendre le système SCR de NOx complètement inutile. L'organe 58 de contrôle signale alors au client de mettre plus de réducteur dans le réservoir.

Dans la zone 70, la concentration en réducteur garantit un bon fonctionnement du procédé SCR et donc une bonne réduction des NOx. De plus, l'injecteur 14 n'est pas dégradé.

Dans la zone 72, le niveau de solvant est trop bas. Le réducteur peut cristalliser. En conséquence, il existe un risque sérieux de cristallisation du réducteur et donc de bouchage de l'injecteur 14, de bouchage du filtre 48 ou du filtre 50 et de bouchage du passage 34. De plus, un procédé SCR avec peu de réducteur peut avoir lieu. L'organe 58 de contrôle indique que le niveau du solvant est trop bas et donc qu'il faut rajouter de l'eau dans la solution.

Par exemple, dans le cas où le réducteur utilisé est de l'urée, la zone 68 de la figure 6 correspond à une mesure d'indice de réfraction inférieure à 1,37. La zone 70 de la figure 6 correspond à une mesure d'indice de réfraction comprise entre 1,37 et 1,52. La zone 72 de la figure 6 correspond à une mesure d'indice de réfraction supérieure à 1,52. Au point particulier 78, l'indice de réfraction vaut environ 1,55. Dans le cas particulier où de l'urée est utilisée comme réducteur, l'urée est alors solide.

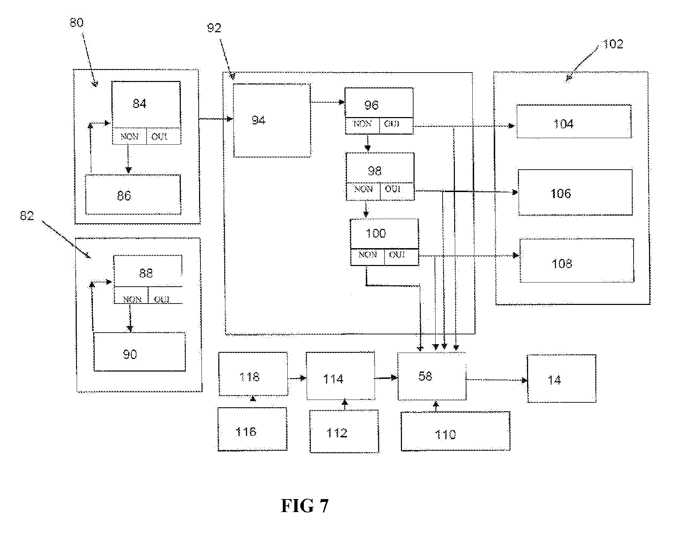

La figure 7 est un ordinogramme de gestion de la quantité de solution.

La figure 7 montre une séquence de décisions basée sur l'information des capteurs (capteur 46 ou 56 et capteurs de température 44 ou 54). L'information des capteurs est tournée en action : quantité de réducteur à injecter, chauffage de la solution de réducteur, messages de l'organe 58 à l'utilisateur...

Deux séquences de décision 80 et 82 concernent la gestion de la température respectivement dans la chambre 32 et dans le réservoir 16.

La séquence de décision 80 comprend un test de comparaison 84 et une étape 86. Le test 84 correspond à la comparaison de la mesure de la température de la chambre 32 par le capteur de température 54 à un seuil prédéfini. Lorsque la température de la chambre est inférieure au seuil fixé, l'étape 86 est effectuée : l'élément de chauffage 52 est actionné. La température de la chambre 32 est ainsi maintenue supérieure au seuil prédéfini. Le seuil prédéfini peut aussi être fixé à tout point compris entre -20°C et 50°C. Ce seuil est choisi pour assurer qu'il n'y ait pas de cristaux de réducteur dans la solution. Ainsi, dans le cas où de l'urée est utilisée comme réducteur, un seuil de 20°C est préférentiellement choisi.

De même, la séquence de décision 82 comprend un test de comparaison 88 et une étape 90. Le test de comparaison 88 correspond à la comparaison de la mesure de la température du réservoir 16 par le capteur de température 44 à un seuil prédéfini. Lorsque la température de la chambre 32 est inférieure au seuil fixé, l'étape 90 est effectuée : l'élément de chauffage 42 est actionné. La température du réservoir 16 est ainsi maintenue supérieure au seuil prédéfini. Le seuil prédéfini peut aussi être fixé à tout point compris entre -20°C et 20°C. Ce seuil est choisi pour assurer que la solution reste liquide. Ainsi, dans le cas où de l'urée est utilisée comme réducteur, un seuil de 5°C est préférentiellement choisi.

Le principe de deux zones de volumes différents (réservoir 16 et chambre 32) chauffées à deux températures différentes est avantageux. Cet emploi de deux zones évite de chauffer le grand volume du réservoir 16 à une température plus élevée que nécessaire. De l'énergie est ainsi économisée ce qui garde la consommation d'essence au minimum.

La séquence de décision 92 comprend une étape 94 et plusieurs tests de comparaison 96, 98 et 100. La séquence décision 92 permet de déterminer une étape à effectuer en fonction de la valeur de l'indice. C'est notamment le cas de la séquence d'étapes 102 d'indication de gestion de la solution de traitement des gaz d'échappement, de solvant ou de réducteur qui comprend les étapes 104, 106 et 108.

Lorsque la température de la chambre 32 est maintenue à la température voulue, l'étape 94 est effectuée. L'étape 94 consiste par exemple à effectuer une mesure de l'indice de réfraction dans la chambre 32 à l'aide du capteur 56.

L'indice de réfraction mesuré peut ensuite être comparé dans le test de comparaison 96. Si l'indice de réfraction est inférieur ou égal à 1,1 par exemple, l'étape 104 est effectuée. A l'étape 104, l'organe 58 constate que le niveau de la solution est trop bas et qu'un remplissage du réservoir 16 est nécessaire. Eventuellement, l'étape 104 peut être accompagnée d'un message à l'utilisateur indiquant que le niveau de la solution est trop bas et qu'un remplissage du réservoir 16 est nécessaire.

Dans le cas où l'indice de réfraction mesuré à l'étape 94 est supérieur strictement à 1,1 par exemple, un nouveau test de comparaison 98 de l'indice de réfraction mesuré est effectué.

Si l'indice de réfraction mesuré est inférieur ou égal à la valeur de 1,35 par exemple, l'action 106 est effectuée. A l'étape 106, l'organe 58 constate que le niveau de réducteur dans la solution est trop bas et qu'un remplissage du réservoir 16 avec du réducteur est nécessaire. Eventuellement, l'étape 106 peut être accompagnée d'un message à l'utilisateur indiquant que le niveau de réducteur dans la solution est trop bas et qu'un remplissage du réservoir 16 avec de l'urée est nécessaire.

Dans le cas où l'indice de réfraction mesuré à l'action 94 est supérieur strictement à 1,35, un nouveau test de comparaison 100 de l'indice de réfraction mesuré est effectué.

Si l'indice de réfraction mesuré est supérieur ou égal à la valeur de 1,50 par exemple, l'étape 108 est effectuée. A l'étape 108, l'organe 58 constate que le niveau de solvant dans la solution est trop bas et qu'un remplissage du réservoir 16 avec de l'eau est nécessaire. Eventuellement, l'étape 108 peut être accompagnée d'un message à l'utilisateur indiquant que le niveau de solvant dans la solution est trop bas et qu'un remplissage du réservoir 16 avec de l'eau est nécessaire.

Quelque soit le résultat des différents tests de comparaisons, les résultats sont envoyés vers l'organe 58 qui contrôle l'injecteur 14.

Cet organe 58 reçoit aussi d'autres informations 110 et 114. L'information 110 est une table de réducteur à injecter pour une quantité donnée de NOx ainsi que l'information 114 sur les proportions du mélange de NO et de NO2 en sortie du réacteur 12 d'oxydation catalytique.

L'information 114 peut être déterminée à partir des informations 112, 116 et 118. L'information 118 est la quantité de NOx émise dans les émissions de la chambre de combustion 10. L'information 118 peut être déterminée à partir de l'information 116 d'une table d'émission de NOx dans les émissions de la chambre de combustion 10 ou à partir de données mesurées par un détecteur à NOx 20 ou 24. L'information 112 est une table des proportions de mélange de NO et de NO2.

Avec la connaissance de toutes ces informations, l'organe 58 est capable de gérer la solution de réducteur et notamment son injection dans la ligne d'échappement.

Le procédé et le dispositif de gestion d'une solution de traitement des gaz d'échappement de véhicules permettent donc de déterminer de manière précise et fiable la détermination précise de la concentration de réducteur dans la solution.

## Revendications

1. Un procédé de gestion d'une solution de traitement des gaz d'échappement, le procédé comprenant les étapes de maintien à une température fixée de la solution, et de mesure de l'indice de réfraction de la solution à ladite température.

2. Le procédé selon la revendication 1, dans lequel l'étape de maintien à une température fixée comprend une étape de mesure de la température de la solution, et une étape de chauffage de la solution si la température est inférieure à un seuil prédéterminé.

3. Le procédé selon l'une des revendications 1 ou 2, la solution de traitement des gaz d'échappement étant dans un réservoir (16) et dans une chambre de pré-injection (32) reliée au réservoir (16), la chambre (32) ayant un volume inférieur au volume du réservoir (16), le procédé comprenant, au cours de l'étape de maintien à une température fixée, le maintien de la solution du réservoir (16) à une température inférieure à la température de la solution dans la chambre (32).

4. Le procédé selon l'une des revendications 1 à 3, la solution de traitement des gaz d'échappement comprenant en outre un solvant, le procédé comprenant en outre, selon l'indice de réfraction mesuré, une étape d'indication de gestion de la solution de traitement des gaz d'échappement, de solvant ou de réducteur.

5. Un dispositif de gestion d'une solution de traitement des gaz d'échappement, le dispositif comprenant un élément de chauffage (42, 52) de la solution à une température fixée et un capteur (46, 56) de mesure de l'indice de réfraction de la solution de traitement des gaz d'échappement à ladite température.

6. Le dispositif selon la revendication 5, comprenant un réservoir (16) de solution de traitement des gaz d'échappement comprenant l'élément de chauffage (42, 52), une chambre (32) de pré-injection de solution aqueuse, la chambre (32) étant reliée au réservoir (16) et ayant un volume inférieur au volume du réservoir (16), la chambre (32) comprenant le capteur (46, 56) de mesure de l'indice de réfraction.

7. Le dispositif selon l'une des revendications 5 ou 6, comprenant un réservoir (16) de solution de traitement des gaz d'échappement comprenant un premier élément de chauffage (42), une chambre (32) de pré-injection de solution de traitement des gaz d'échappement, la chambre (32) étant reliée au réservoir (16) et ayant un volume inférieur au volume du réservoir, la chambre (32) comprenant un deuxième élément de chauffage (52) et le capteur (56) de mesure de l'indice de réfraction.

8. Le dispositif selon la revendication 7, comprenant en outre un deuxième capteur (46) de mesure de l'indice de réfraction dans le réservoir (16).

9. Le dispositif selon l'une des revendications 6 à 8, dans lequel la chambre (32) de pré-injection est dans le réservoir (16).

10. Le dispositif selon l'une des revendications 6 à 8, comprenant en outre un capteur de température (44, 54) de la solution dans la chambre (32) et dans le réservoir (16).

11. Le dispositif selon l'une des revendications 5 à 10, comprenant en outre un organe (58) de contrôle relié à: des capteurs de température (44, 54) le cas échéant, le ou les éléments de chauffage (42, 52) et le ou les capteurs (46, 56) de mesure de l'indice de réfraction, l'organe (58) de contrôle étant adapté à fournir une indication de gestion de la solution aqueuse.

12. Un moteur comprenant une ligne (9) d'échappement de gaz, un injecteur (14) relié au conduit d'échappement de gaz, et le dispositif selon l'une des revendications 5 à 11
